# EUROPEAN PATENT SPECIFICATION

(11) **EP 0 476 970 B1**
(45) Date of publication and mention of the grant of the patent: **05.03.1997**
(21) Application number: 91308467.9
(22) Date of filing: 17.09.1991
(51) Int. Cl.: B62B 3/00

(54) **Goods Container**
Güterbehälter
Container de marchandises

(30) Priority: 17.09.1990 GB 9020276; 28.11.1990 GB 9025814
(43) Date of publication of application: 25.03.1992
(60) Divisional application: 96111407.1
(73) Proprietor: ELOPAK SYSTEMS AG, CH-8152 Glattbrugg (CH)
(72) Inventor: Avall, Kaj Henrik, SF-01750 Vanda 75 (FI)
(74) Representative: Burrows, Anthony Gregory

(56) References cited:
- EP-A- 0 192 889
- EP-A- 0 326 767
- FI-A- 871 073
- FR-A- 2 429 141
- GB-A- 2 169 873
- NL-A- 8 501 404

## Description

This invention relates to a goods container.

Roll containers are known which take the form of trolleys comprised of three or four sides, a horizontal, rectangular, shelf-form base, and four rollers, two of which are castors. They often include horizontal, rectangular shelves arranged at intervals upwardly from the base. They are frequently used for the transporting of milk cartons from dairies to supermarkets, for example.

One known type of roll container has one of its four sides in the form of a gate pivotally mounted on one of the adjacent sides so as to be turnable outwards from its closed position into an open position face-to-face with that adjacent side. The gate is open while the container is loaded with cartons in the dairy and later while the container is unloaded by customers in the supermarket. An example of this type is disclosed in EP-A-0192889 and has pairs of shelves arranged at a regular pitch above the base. The shelves of each pair are pivotally mounted upon the respective lateral sides and upwardly turnable into substantially vertical ineffective positions.

Another known type of roll container has one of its sides formed with horizontal through openings separated by horizontal bars. That side wall is a non-turnable gate vertically liftable mechanically or manually at a dairy, for example, to bring the horizontal bars into non-obstructive positions at the levels of respective shelves to allow the shelves to be mechanically loaded with cartons. After loading, the gate is lowered back to a position in which the horizontal bars occupy respective obstructive positions in which they obstruct the cartons from falling from the shelves. The customer in the supermarket takes the cartons from the shelves by taking cartons from the top shelf, folding-up the top shelf and taking cartons from the other shelves downwards in turn and folding-up those shelves in turn. An example of this type is disclosed in US-A-3797842 which has only three sides, but with the cartons being retained at the front side by upturned front edges of the shelves, which comprise profiled plates arranged at a regular pitch above the base, but pivotally mounted upon the rear side so as to be upwardly turnable to ineffective positions.

In a further known type of roll container, one side is in the form of the turnable gate and the opposite side has the horizontal bars and is a non-turnable gate vertically liftable mechanically. "Normal" cartons are mechanically loaded through the vertically liftable gate, whilst "special" packs are loaded through the opened turnable gate. The customers unload the cartons and packs through the opened turnable gate.

WO-A-86/02610 discloses a goods container in which horizontal shelves are collapsible rearwardly to adjacent the rearmost side wall, which takes the form of a vertically displaceable trapdoor which, after loading of normal cartons from the rear beginning with the topmost shelf, is lowered in stages to retain the cartons on the shelves. The customers unload the cartons from the front of the roll container, where the shelves have upturned edges to retain the cartons. There is no disclosure that the roll container is usable for special packs; in any event it is not very suitable for special packs because the shelves when rearwardly collapsed obstruct part of the internal volume of the roll container.

GB-A-2169873 discloses a roll container with four sides and a base, but no shelves. The front side consists of an aside turnable gate whilst the rear side consists of either a non-turnable, vertically slidable gate including two uprights and a plurality of horizontal bars at a regular pitch, or a plurality of horizontal bars vertically slidable in respective pairs of vertical, lateral guide slots at a regular vertical pitch. Layers of cartons in rectangular arrays are piled upon the base, the horizontal bars being lifted out of the paths of the layers during loading and, after loading, dropping back to retain the cartons in the container.

FR-A-2429141 discloses a roll container with four sides and a base, but no shelves. The front side is in the form of an aside turnable gate and the rear side is in the form either of a lower section fixed to the lateral sides and a non-turnable upper section vertically slidable in the lower section, or of a lower section hinged to both of the lateral sides and an upper section downwardly turnable about a horizontal axis.

FI-A-871073 discloses a roll container with a gate pivotally mounted upon an adjacent side of the roll container and consisting of a rectangular frame and two gate sections movable vertically within the frame, the frame being of inwardly open channel form, whereby the gate sections are vertically guided. The gate sections each consist of two horizontal rods interconnected vertically by inwardly bent bars. The gate sections can be moved vertically among a condition in which they substantially completely overlap each other at the upper half of the gate, a condition in which they substantially completely overlap each other at the lower half of the gate, which two conditions allow loading into the lower and upper halves of the container, respectively, and a third condition in which they overlap only slightly and in which they retain the goods against falling through the gate.

NL-A-8501404 (which corresponds to the pre-characterizing portion of claim 1) discloses a roll container comprised of three sides, a base and shelves at a regular pitch above the base. At the front, the shelves have upwardly turned edges and upwardly spaced horizontal bars to retain cartons. The shelves are retractable rearwardly into a horizontally folded condition. The rear side of the container comprises a non-turnable, vertically slidable gate consisting of two lateral uprights and horizontal bars arranged at a vertical pitch equal to that of the base and shelves. Rectangular arrays of cartons can be loaded onto the respective shelves through the rear gate whilst the horizontal bars of the gate are at the levels of the shelves and then the rear gate dropped to enable the gate bars to help to retain the cartons on the shelves. Instead of the shelves having upwardly turned front edges and upwardly spaced horizontal front bars, a fixed front panel may be provided, but in that case the container is not suitable for nesting. The front panel could be in the form of a door and in that case the roll container can be of the nesting type. It is also possible to make the front panel in the same way as the rear side. The roll container can then be loaded, or unloaded, from the front and the rear. If the roll container must be suitable for nesting, the front panel must be able to hinge with respect to the lateral sides. There is no disclosure that the roll container is usable for special packs; in any event it is not very suitable for special packs because the shelves when rearwardly collapsed obstruct part of the internal volume of the roll container.

The type of roll container with front and rear goods-transfer gates is the most versatile from a use point of view, but the more moving sides a roll container has the more costly and complicated it becomes.

"Special" packs may take the form of layers of cartons arranged in a pile of a height greater than the vertical spacing between the shelves, in which case the shelves have to be folded away to the rear wall or to one or both of the lateral walls of the roll container. In relation to such special packs, a disadvantage of the type of roll container which has one of its side walls liftable and lowerable is that the vertical pitch of the horizontal bars of the side wall, which has to be substantially equal to the vertical pitch of the shelves, can be so large that cartons of the special packs may fall from the pile and through the openings among the bars. A problem with a type of roll container in which shelves are folded away to the rear wall or to one or both of the lateral walls when the roll container is to receive "special" packs, is that it may be unable to receive a full height of special packs because the uppermost shelf or shelves, when raised to fold them away, may project above the tops of the side walls, whereby the roll container becomes unsuitable for automatic handling and transportation. The shelves cannot be designed to be folded away downwardly instead of upwardly, because then the supermarket customer would not then be able to fold the shelves away upwardly to obtain access to "normal" cartons immediately below.

According to the present invention, there is provided a goods container including a goods-transfer gate, the gate including substantially horizontal members separating substantially horizontal openings through which goods can be introduced into the container, the members and the openings extending uninterruptedly over the internal width of the gate, and the gate being upwardly and downwardly displaceable between a non-obstructive condition in which goods can be introduced through the openings into the container and an obstructive condition in which the introduced goods are obstructed by the members from leaving the container through the openings, characterized in that said goods-transfer gate is the only goods-transfer gate of the container and is pivotally mounted on an adjacent side of said container without the interposition of an intermediate frame, so as to be openable to allow access to the interior of the container

Owing to this aspect of the invention, it is possible to provide a goods container which has versatility in use obtained at a reduced cost.

The goods container may include shelves vertically spaced apart through a substantially constant vertical pitch, the substantially horizontal members, in a fully lowered condition of the gate, being spaced vertically apart through substantially that pitch; whilst the gate may comprise a lower section and an upper section vertically displaceable relative to the lower section, each of the upper section and the lower section including at least one of the substantially horizontal members, and one of the sections including at least one additional substantially horizontal member spaced from its nearest one of the substantially horizontal members by an amount less than the substantially constant vertical pich. It is thus possible to provide a goods container which can not only have its shelves mechanically loaded with "normal" articles, but, with the shelves retracted, carry a full height of "special" articles in a pile.

The liftable gate can also be turnable about an adjacent side of the container so as to be openable to allow access to the interior of the container.

The shelves may be displaceable among respective substantially horizontal positions in which they project inwards from side means of the container and are vertically spaced apart, respective upwardly retracted positions which are above said horizontal positions and in which the shelves lie in substantially vertical planes at the side means, and respective downwardly retracted positions which are below said horizontal positions and in which the shelves lie in substantially vertical planes at the side means. Thereby, the shelves can selectively occupy upwardly retracted positions or downwardly retracted positions, as required.

In order that the invention may be clearly understood and readily carried into effect, reference will now be made, by way of example, to the accompanying drawings, in which:-
Figure 1 shows a front perspective view of a roll container, with a front gate closed,
Figure 2 is a view similar to Figure 1, but with the gate lifted and partially open,
Figure 3 is a view similar to Figure 2, but with the front gate lowered and partially open,
Figure 4 is a front view of the roll container in a nesting condition,
Figure 5 shows a fragmentary horizontal section through the container with the gate closed,
Figure 6 shows a front elevation of a modified version of the roll container, with a front gate fully lowered and closed,
Figure 7 is a view similar to Figure 6, but with the front gate raised,
Figure 8 is a view similar to Figure 6, but with an upper section of the front gate raised further,
Figure 9 shows a front perspective view of the modified version, but with the front gate lowered and almost fully open and shelves thereof in horizontal positions,
Figure 10 is a view similar to Figure 9, but with the shelves in downwardly retracted positions,
Figure 11 is a view similar to Figure 9, but with the shelves in upwardly retracted positions, and
Figure 12 is a fragmentary, top perspective view of the modified version with all but one shelf in horizontal positions.

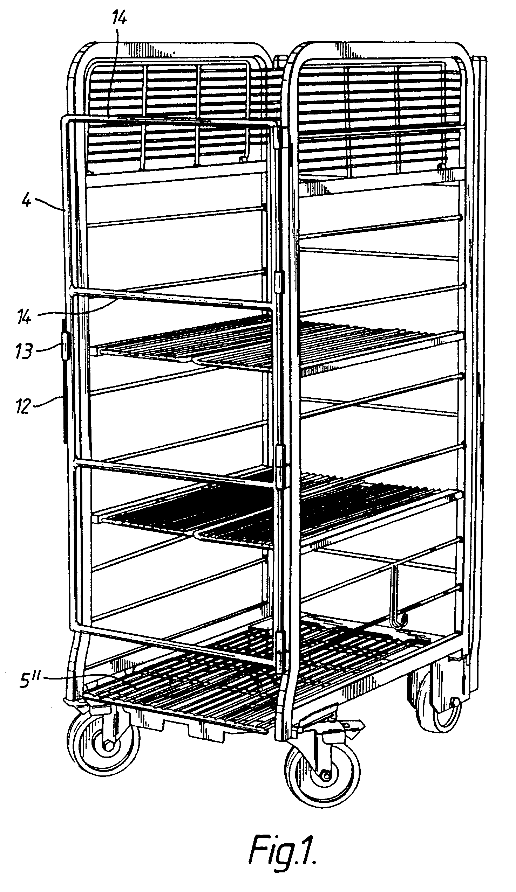

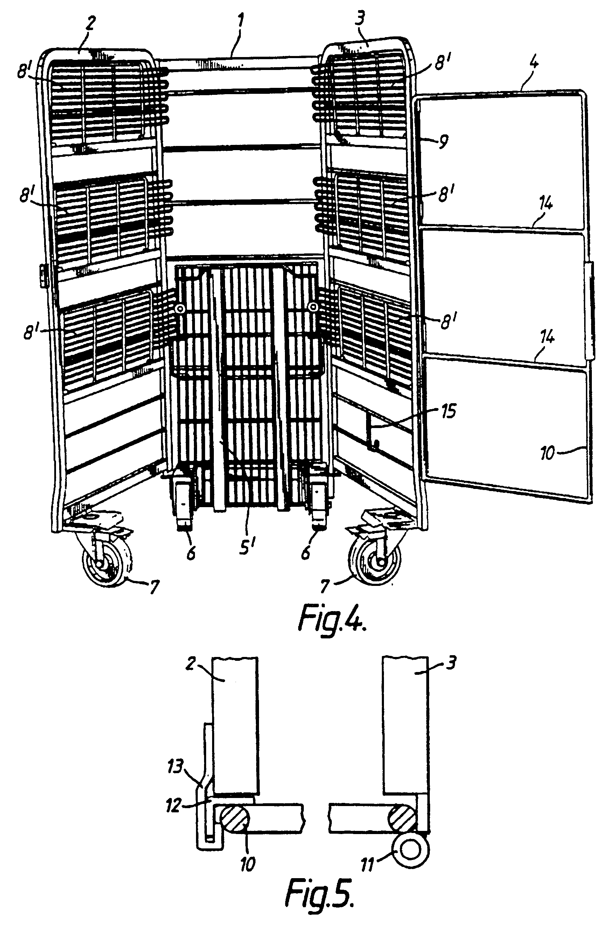

Referring to the drawings, the roll container comprises a rear side 1, two lateral sides 2 and 3 hinged to the rear side 1, a front side 4 in the form of a gate hinged to the side 3, a shelf-form base 5 hinged to the rear side 1 so as to be turnable between an almost vertical position 5′shown in Figure 4 and a horizontal position 5'' shown in Figures 1 to 3, rear rollers 6 mounted on the rear side 1, front castors 7 mounted on the sides 2 and 3, and pairs of shelves 8 hinged to the sides 2 and 3 so as to be turnable between vertical positions 8′ and horizontal positions 8'' shown. The vertical spacings among the shelf 5 and the horizontal pairs of shelves 8 are equal to each other.

The gate 4 includes two lateral, vertical bars 9 and 10 of which the bar 9 is hinged to the side 3 by hinges 11 which allow the gate to be lifted through at least a distance almost equal to the vertical spacing among the shelf 5 and the pairs of shelves 8 and of which the bar 10 has fixed thereto a vertical channel member 12 which engages behind a hook 13 fixed to and projecting forwards from the side 2. The gate 4 also includes horizontal bars 14 fixed to the bars 9 and 10 and spaced apart vertically from each other through a distance equal to the vertical spacing among the shelves. An inverted hook 15 fixed to the side 3 can retain the gate 4 in a fully open position.

In the gate position shown in Figure 1, the gate occupies its lowermost position under its own weight and the hook 13 is engaged around the upper end zone of the channel member 12 to retain the gate closed. The bars 14 are spaced are the shelves 5 and 8 to an extent sufficient to retain milk cartons (not shown), for example, on the shelves.

For the roll container to be mechanically loaded at the dairy, with the roll container in the condition shown in Figures 1 and 5, the gate 4 is lifted mechanically or manually to a position in which all but the uppermost of the bars 14 are at the levels of the horizontal shelves 8 and in which the hook 13 engages around the lower end zone of the member 12 to prevent undesired opening of the gate 4. Then the shelves 5 and 8 are loaded with cartons; if necessary, some or all of the pairs of shelves 8 are turned up into their vertical positions. Thereafter, the gate 4 is lowered back into the position shown in Figure 1, in which the loaded roll container is transported to the supermarket.

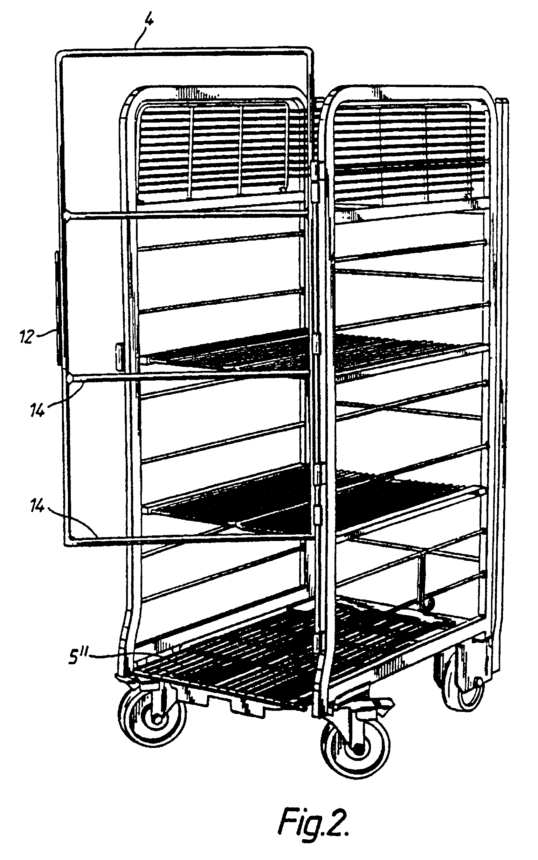

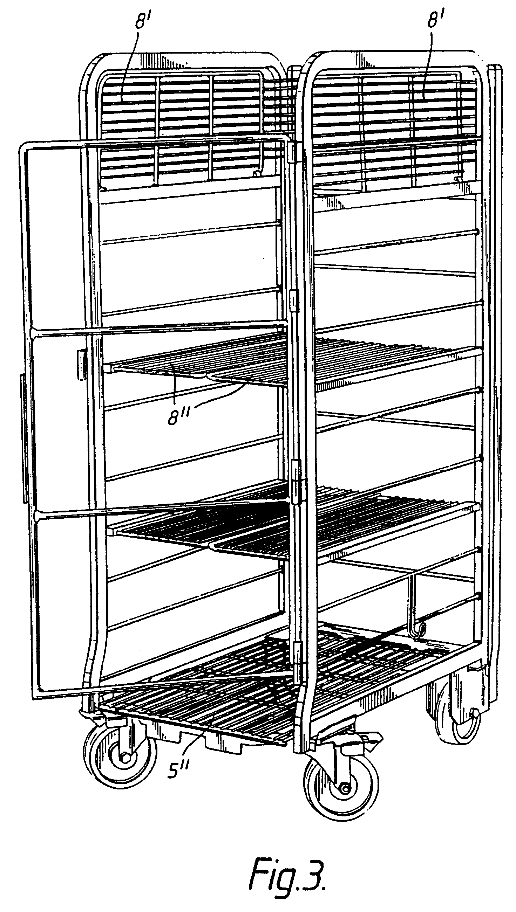

For customers to unload the roll container, the gate 4 is manually lifted to bring the channel member 12 to above the hook 13. In this position, all but the uppermost of the bars 14 are spaced a short distance above the levels of the horizontal shelves 8. The gate 4 can now be manually swung open outwardly, as illustrated in Figure 2. If released, the gate 4 would drop under its own weight to the position shown in Figure 3. The gate can be swung outwards to a fully open position (not shown) in which it can be slightly raised and engaged over the hook 15. Once the container has been emptied, the base 5 can be raised to its position 5′and the lateral sides 2 and 3 swung apart to a limited extent to bring the roll container into its nesting condition.

For "special" packs, the gate 4 can be opened at the dairy and these packs be loaded onto one or more of the shelves 5 and 8.

It is not necessary for the whole of the gate to be liftable to allow loading; instead, one or more parts of the gate could be liftable relative to the remaining part thereof.

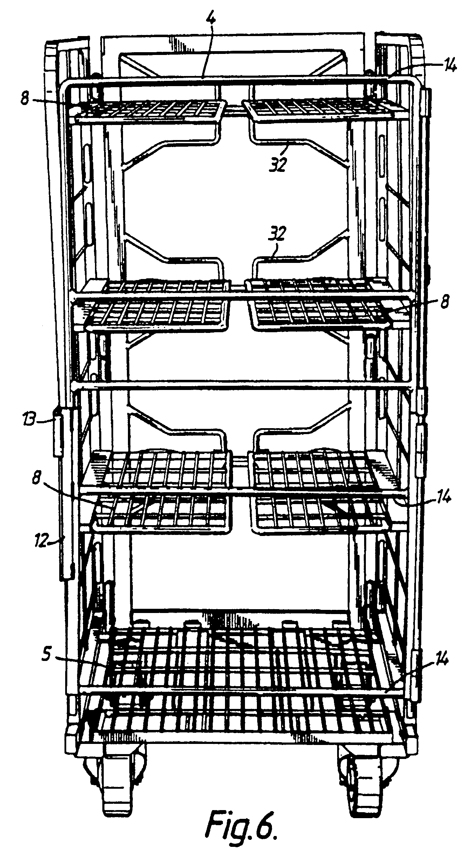

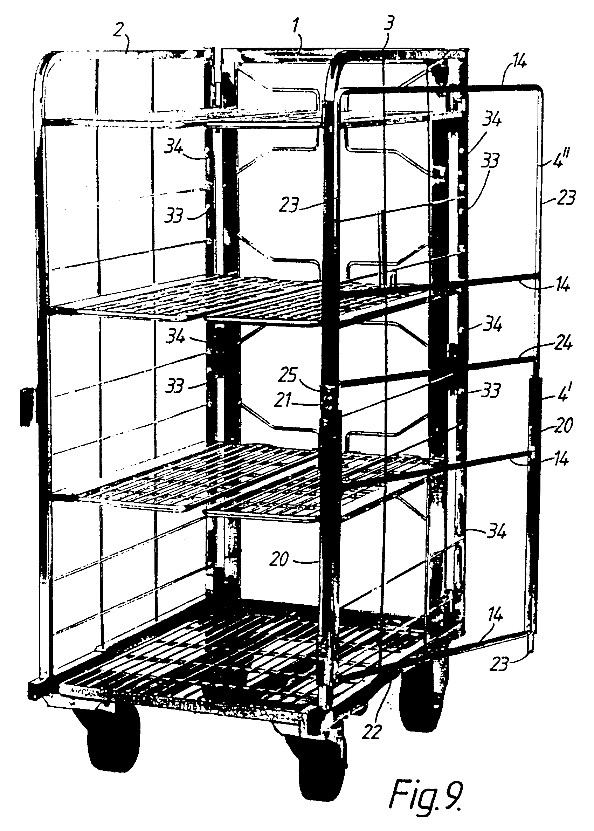

Referring to Figures 6 to 12, the front gate 4 of the modified version comprises a lower section 4′ and an upper section 4''. The lower section 4′ comprises two vertical channels 20 to which are welded two horizontal bars 14 of a vertical pitch equal to the vertical pitch of the shelves 5 and 8. The lower section 4′ is hinged to the lateral side 3 by way of a long vertical hinge pin and upper and lower bushes 21 and 22 fixed to the lower section 4′ and encircling the hinge pin. The upper section 4'' consists of two vertical bars 23 extending almost the whole height of the roll container, two horizontal bars 14 at a vertical pitch equal to the vertical pitch of the shelves 5 and 8, and an additional horizontal bar 24 at a vertical spacing from the nearer bar 14 of the upper section 4'' significantly less than the vertical pitch of the shelves. As shown, the gate 4 is almost as tall as the sides 1 to 3, but it may instead be as tall as those sides. A bush 25 encircling the vertical hinge pin and fixed to the upper section 4'' supports the upper section 4'' on the bush 21 and thus prevents it from falling, relative to the lower section 4′, to lower than the position shown in Figures 6 and 9, in which the vertical spacing between the lower bar 14 of the upper section 4'' and the upper bar 14 of the lower section 4′ is equal to the vertical pitch of the shelves. The lower parts of the bars 23 are received in and vertically guided by the vertical channels 20.

In the condition shown in Figure 6, the horizontal bars 14 of the front gate 4 are all vertically spaced a sufficient distance above the levels of the shelves 5 and 8 to retain cartons placed thereon.

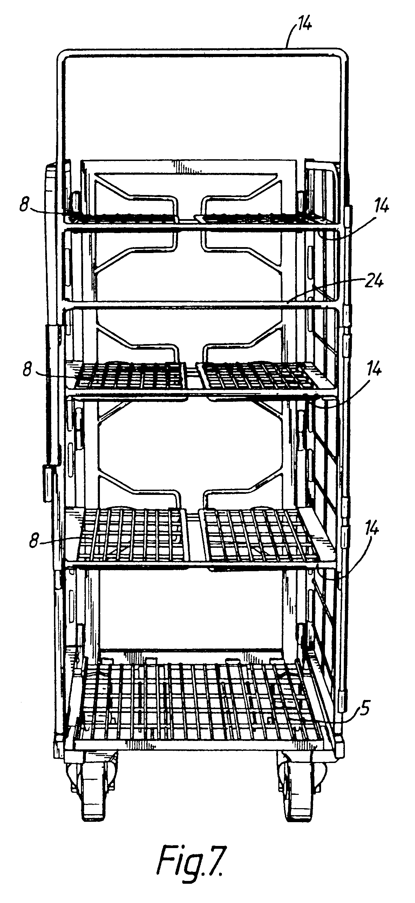

In the condition shown in Figure 7, the lower section 4′ has been mechanically raised, and with it the upper section 4'', to bring the three lower bars 14 to the levels of the shelves 8, so that the shelf 5 and the lowermost and uppermost pairs of shelves 8 can be mechanically loaded with cartons, although the bar 24 prevents the intermediate pair of shelves 8 from being so loaded.

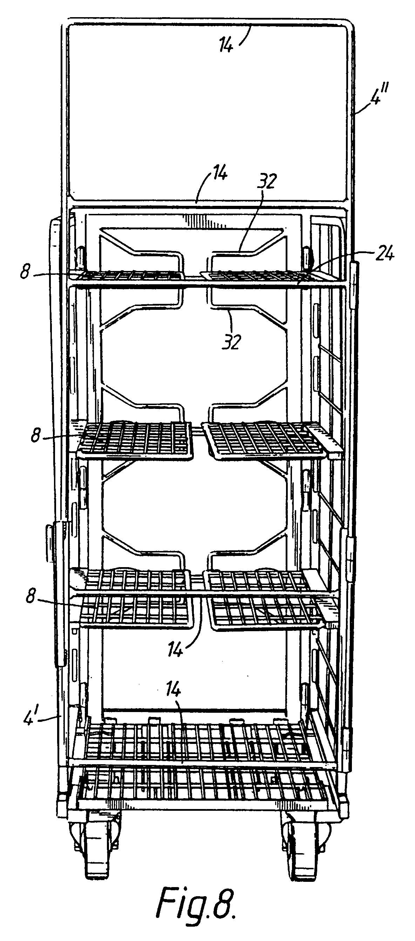

In the condition shown in Figure 8, the lower section 4′ has returned to its lowermost position, but the upper section 4'' has been further raised to bring the horizontal bar 24 to the level of the uppermost pair of shelves 8, whereby the intermediate pair of shelves 8 can be loaded with cartons.

It is also possible to load brick-shaped cartons into the roll container with at least some of the shelves 8 in their fully lowered positions and with the gate 4 closed, but the sections 4′ and 4'' being slid vertically.

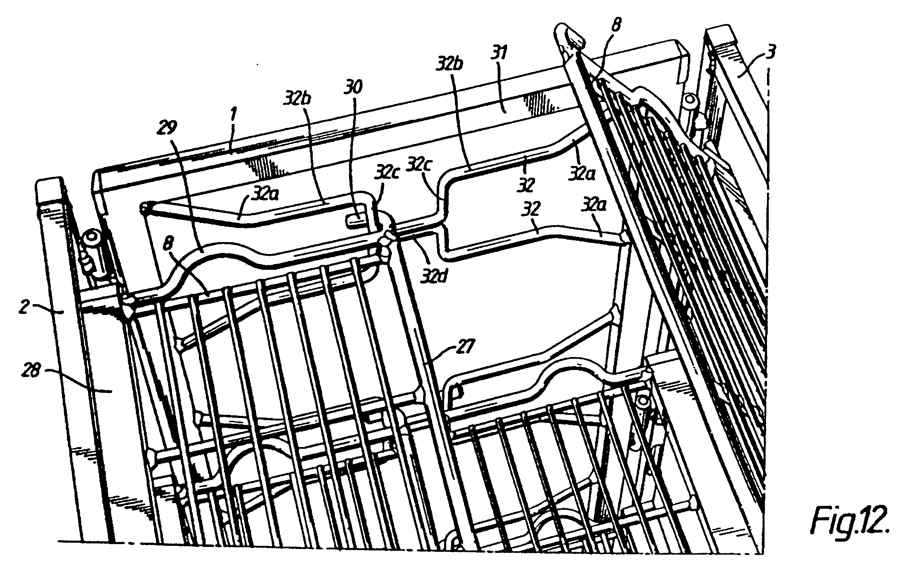

Referring particularly to Figure 12, at its rearmost edge, each shelf 8 is formed as a resilient wire 26 fixed at its respective ends to the innermost and outermost horizontal wires 27 and 28 of the shelf and formed near its outer end with a rearwardly projecting bow 29 and at its inner end with a rearwardly extending hook 30. Each shelf 8 is pivotally mounted upon a horizontal rod of the side wall 2 or 3. Encircling the front end of this rod is a helical compression spring which continuously urges the shelf 8 rearwardly.

Apart from a tubular rectangular frame 31, the rear side 1 consists of pairs of wires 32 of a particular profile, with the profile of an upper wire of each pair being a mirror image of the profile of the lower wire of each pair relative to a horizontal plane containing the horizontal pivots of an associated pair of shelves 8. Considering the upper wire 32 of each pair, it comprises two downwardly and inwardly inclined end portions 32a, followed by two horizontal portions 32b, followed by two vertical portions 32c, followed by a common horizontal linking portion 32d. The lower wire 32 of each pair has the same portions but arranged in mirror image. In an alternative version (not shown), the lower wire 32 may have a simpler profile, namely have a horizontal portion interconnecting the inner ends of the portions 32a.

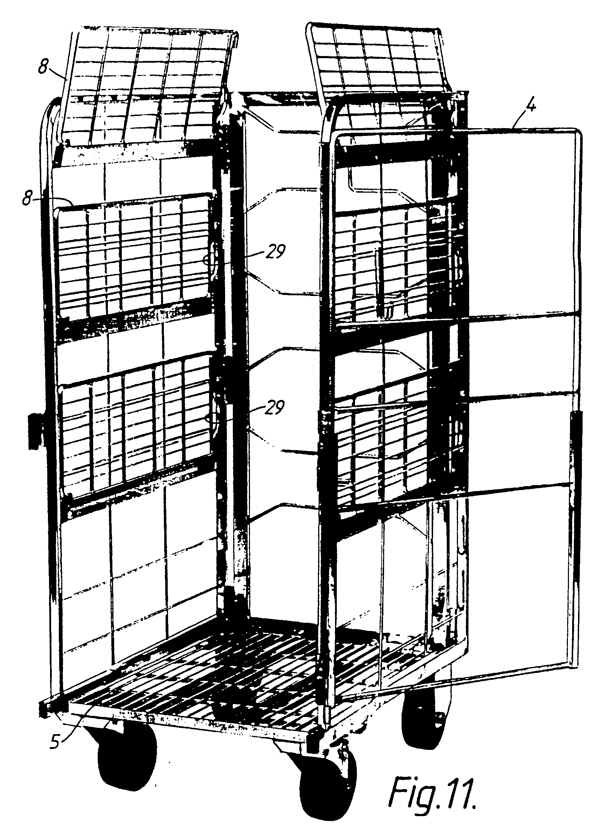

To turn a shelf 8 from its horizontal position shown in Figures 9 and 12, for example, to its vertical or substantially vertical position shown in Figure 11, the shelf 8 is simply turned upwards manually or mechanically, which initially brings the hook 30 from its position resting on the linking portion 32d of the upper wire 32 and embracing the vertical portion 32c, into a position above the horizontal portion 32b. Continued upward turning of the shelf brings the bow 29 into contact with the obliquely inclined portion 32a and also with an adjacent part of the frame 31 of the rear side 1 to press the shelf 8 forwards against the action of its helical compression spring. All but the uppermost pair of shelves 8 can be continued to be turned until their bows 29 enter vertical grooves 33 pressed into the forwardly directed faces of the rear uprights of the tubular frames of the lateral walls 2 and 3, whereby the shelf 8 is releasably fixed in its vertically raised position. The bows 29 of the uppermost pair of shelves 8 releasably enter gaps between the sides 1 and 2 and the sides 1 and 3.

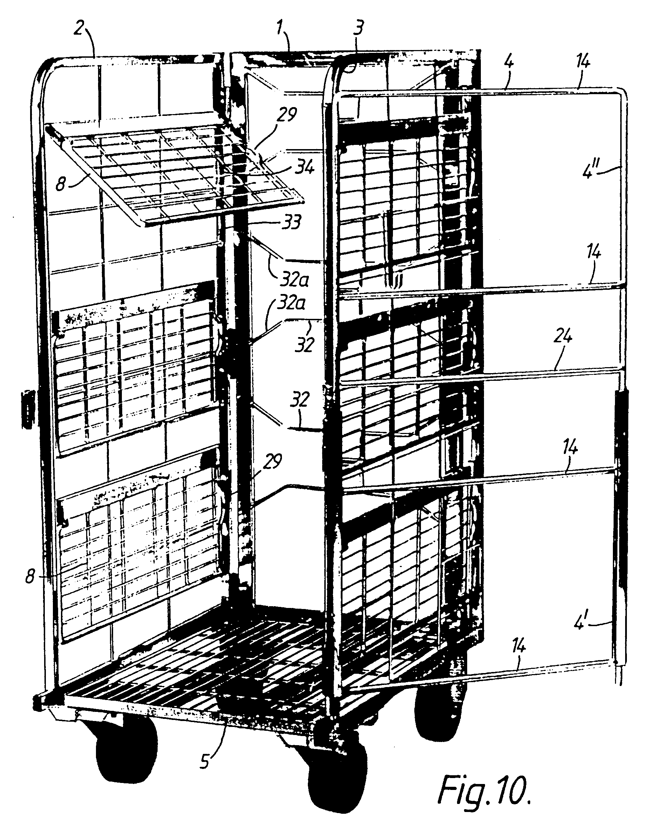

To bring one of the shelves 8 from its horizontal position to its vertically lowered position shown in Figure 10, the shelf is first turned upwards to bring the hook 30 to above the horizontal portion 32b and then the shelf is manually or mechanically pushed forwards relative to the sides 1 to 4, against the action of its helical compression spring, to bring the hook 30 forwards to clear of the wires 32 as seen in plan, and then the shelf is turned downwards to bring the shelf into its vertically downward position, in which its bow 29 can engage in a further vertical groove 34 formed in the forwardly directed face of the rear upright of the frame of the lateral wall 2 or 3. The portions 32a of the lower wire 32 of the relevant pair can co-operate with the bow 29, if necessary, to ensure that the shelf 8 continues to be pressed forwards against the action of its helical compression spring during lowering. Such a situation is shown for the left-hand shelf 8 of the uppermost pair in Figure 10. With at least some of the shelves 8 in their vertically lowered positions, a pile of special packs can be loaded into the roll container and the front gate 4 closed, the additional horizontal bar 24 helping to prevent such special packs from falling through the opening between its two adjacent bars 14.

In their vertically lowered conditions, the shelves 8 lie within the lateral sides 2 and 3, i.e. between the vertical inner and outer boundary planes of their particular side 2 or 3, and thus do not provide projections against which loads or loading mechanisms can snag; such an arrangement also enables the external width of the roll container to be minimised.

## Claims

1. A goods container including a goods-transfer gate (4), the gate (4) including substantially horizontal members (14) separating substantially horizontal openings through which goods can be introduced into the container, the members (14) and the openings extending uninterruptedly over the internal width of the gate (4), and the gate (4) being upwardly and downwardly displaceable between a non-obstructive condition in which goods can be introduced through the openings into the container and an obstructive condition in which the introduced goods are obstructed by the members (14) from leaving the container through the openings, characterized in that said goods-transfer gate (4) is the only goods-transfer gate of the container and is pivotally mounted on an adjacent side (3) of said container without the interposition of an intermediate frame, so as to be openable to allow access to the interior of the container.

2. A goods container according to Claim 1, characterized in that, throughout its displacement between said non-obstructive condition and said obstructive condition, said gate (4) is releasably latched closed by means of a substantially horizontally projecting hook (13) engaging with a substantially horizontally projecting, substantially vertical element (12) liftable to a position completely above the hook (13) to allow the gate (4) to be swung open.

3. A goods container according to Claim 1 or 2, characterized in that a first part (4'') of the gate (4) is upwardly and downwardly displaceable relative to said adjacent side (3) and to a second part (4') of the gate (4), and wherein, in said obstructive condition, said substantially horizontal members (14) are spaced vertically apart through a substantially constant vertical pitch, each of said first part (4'') and said second part (4') including at least one of said members (14), and one of the first and second parts (4'', 4') including at least one additional substantially horizontal member (24) spaced from its nearest one of said members (14) by an amount less than said substantially constant vertical pitch.

4. A goods container according to claim 3, characterized in that said first part (4'') is an upper section (4'') of said gate (4) and includes said additional substantially horizontal member(s) (24) and said second part (4') is a lower section (4') of said gate (4).

5. A goods container according to any preceding claim and including retractable shelves (8), characterized in that said shelves (8) are displaceable among respective substantially horizontal positions in which they project inwards from said side (3) and are vertically spaced apart, respective upwardly retracted positions which are above said horizontal positions and in which the shelves (8) lie in substantially vertical planes at said side (3), and respective downwardly retracted positions which are below said horizontal positions and in which the shelves (8) lie in substantially vertical planes at said side (3).

6. A goods container according to claim 5, characterized in that said container includes another side (1) substantially perpendicular to said adjacent side (3) and providing respective supports (32) for said shelves (8) in their substantially horizontal positions, and in that said shelves (8) are substantially horizontally displaceable towards and away from said other side (1) to enable said shelves (8) to be swung past said supports (32).

7. A goods container according to claim 6, characterized in that said container includes biassing means biassing said shelves (8) towards said other side (1), and camming means (29, 31, 32a) serving to cam said shelves (8) away from said other side (1) during turning of said shelves (8) into said upwardly retracted positions and said downwardly retracted positions to enable said shelves (8) to be brought into their upwardly retracted positions and their downwardly retracted positions, in that said shelves (8) in their upwardly retracted positions and their downwardly retracted positions lie substantially wholly outwards of substantially vertical inner boundary planes of said adjacent side (3), and in that said camming means (29, 31, 32a) serves to enable said shelves (8) to pass adjacent uprights of a frame (31) of said other side (1).

8. A goods container according to claim 7, characterized in that said camming means (29, 31, 32a) include respective bowed wires (29) constituting respective edges of said shelves (8) nearest to said other side (1).

9. A goods container according to claim 8, characterized in that said camming means (29, 31, 32a) include pairs of obliquely arranged wire portions (32a) of said other side (1).

10. A goods container according to any one of claims 6 to 9, characterized in that said shelves (8) are provided with respective hooks (30) serving to engage about said respective supports (32).

11. A goods container according to claim 8 or 9, characterized in that said bowed wires (29) releasably engage in respective recesses (33, 34) in said adjacent side (3) in said upwardly retracted positions and said downwardly retracted positions of said shelves (8).

## Patentansprüche

1. Warenbehälter mit einem Warenüberführungs-Gatter (4), das im wesentlichen horizontale Teile (14) zur gegenseitigen Trennung im wesentlichen horizontaler Öffnungen aufweist, durch die Waren in den Behälter eingeführt werden können, wobei sich die Teile (14) und die Öffnungen ununterbrochen über die Innenbreite des Gatters (4) erstrecken und das Gatter (4) aufwärts und abwärts zwischen einem Freigabezustand, in dem Waren durch die Öffnungen hindurch in den Behälter eingeführt werden können, und einem Sperrzustand verschiebbar ist, in dem die eingeführten Waren mittels der Teile (14) daran gehindert werden, den Behälter durch die Öffnungen hindurch zu verlassen,
**dadurch gekennzeichnet,**
daß das Warenüberführungs-Gatter (4) das einzige Warenüberführungs-Gatter des Behälters ist und ohne Zwischenpositionierung eines Zwischenrahmens derart schwenkbar an einer benachbarten Seite (3) des Behälters montiert ist, daß das Warenüberführungs-Gatter (4) zur Ermöglichung eines Zugriffs auf das Innere des Behälters geöffnet werden kann.

2. Warenbehälter nach Anspruch 1, dadurch gekennzeichnet, daß das Gatter (4) während seiner gesamten Verschiebungsbewegung zwischen dem Freigabezustand und dem Sperrzustand mittels eines im wesentlichen horizontal abstehenden Hakens (13) lösbar verriegelt ist, der mit einem im wesentlichen horizontal abstehenden, im wesentlichen vertikalen Element (12) zusammengreift, das in eine vollständig über dem Haken (13) befindliche Position anhebbar ist, um ein Verschwenken des Gatters (4) in die geöffnete Position zuzulassen.

3. Warenbehälter nach Anspruch 1 oder 2, dadurch gekennzeichnet, daß eine erste Komponente (4'') des Gatters (4) relativ zu der genannten benachbarten Seite (3) und zu einer zweiten Komponente (4') des Gatters (4) aufwärts und abwärts verschiebbar ist, wobei in dem Sperrzustand die im wesentlichen horizontalen Teile (14) durch einen im wesentlichen konstanten vertikalen Grundabstand vertikal voneinander beabstandet sind, wobei sowohl die erste Komponente (4'') als auch die zweite Komponente (4') mindestens eines der Teile (14) aufweisen, und eine der ersten und zweiten Komponenten (4'',4') mindestens ein zusätzliches, im wesentlichen horizontales Teil (24) aufweist, das von dem ihm am nächsten gelegenen der Teile (14) in einem Abstand angeordnet ist, der kleiner ist als der im wesentlichen konstante vertikale Zwischenraum.

4. Warenbehälter nach Anspruch 3, dadurch gekennzeichnet, daß die erste Komponente (4'') ein oberer Abschnitt (4'') des Gatters (4) ist und das bzw. die zusätzliche(n), im wesentlichen horizontale(n) Teil(e) (24) aufweist, und die zweite Komponente (4') ein unterer Abschnitt (4') des Gatters (4) ist.

5. Warenbehälter nach einem der vorhergehenden Ansprüche, mit herausziehbaren Regalböden (8), dadurch gekennzeichnet, daß die Regalböden (8) verstellbar sind zwischen jeweiligen im wesentlichen horizontalen Positionen, in denen sie von der genannten Seite (3) aus einwärts ragen und vertikal voneinander beabstandet sind, jeweiligen aufwärtsgerichteten eingeklappten Positionen, die sich oberhalb der horizontalen Positionen befinden und in denen die Regalböden (8) in im wesentlichen vertikalen Ebenen an der Seite (3) anliegen, und jeweiligen abwärtsgerichteten eingeklappten Positionen, die sich unterhalb der horizontalen Positionen befinden und in denen die Regalböden (8) in im wesentlichen vertikalen Ebenen an der Seite (3) anliegen.

6. Warenbehälter nach Anspruch 5, dadurch gekennzeichnet, daß der Behälter eine weitere Seite (1) aufweist, die im wesentlichen rechtwinklig zu der genannten benachbarten Seite (3) angeordnet ist und jeweilige Träger (32) für die Regalböden (8) in deren im wesentlichen horizontalen Positionen aufweist, und daß die Regalböden (8) zu der weiteren Seite (1) hin und von dieser weg im wesentlichen horizontal verschiebbar sind, um ein Verschwenken der Regalböden (8) an den Trägern (32) vorbei zu ermöglichen.

7. Warenbehälter nach Anspruch 6, dadurch gekennzeichnet, daß der Behälter Vorspanneinrichtungen, die die Regalböden (8) zu der weiteren Seite (1) hin vorspannen, und Nockeneinrichtungen (29,31,32a) aufweist, die dazu dienen, während des Schwenkens der Regalböden (8) in die aufwärtsgerichteten eingeklappten Positionen und die abwärtsgerichteten eingeklappten Positionen die Regalböden (8) steuernd von der weiteren Seite (1) weg zu bewegen, um ein Bewegen der Regalböden (8) in ihre aufwärtsgerichteten eingeklappten Positionen und ihre abwärtsgerichteten eingeklappten Positionen zu ermöglichen, daß die Regalböden (8) in ihren aufwärtsgerichteten eingeklappten Positionen und ihren abwärtsgerichteten eingeklappten Positionen im wesentlichen vollständig außerhalb im wesentlichen vertikaler innerer Begrenzungsebenen der benachbarten Seite (3) liegen, und daß die Nockeneinrichtung (29,31,32a) dazu dient, eine Bewegung der Regalböden (8) an benachbarten Vertikalteilen (31) eines Rahmens der weiteren Seite (1) vorbei zu ermöglichen.

8. Warenbehälter nach Anspruch 7, dadurch gekennzeichnet, daß die Nockeneinrichtungen (29,31,32a) jeweilige gebogene Drähte (29) aufweisen, die jeweilige, der weiteren Seite (1) am nächsten gelegene Ränder der Regalböden (8) bilden.

9. Warenbehälter nach Anspruch 8, dadurch gekennzeichnet, daß die Nockeneinrichtungen (29,31,32a) Paare schräg angeordneter Drahtabschnitte (32a) der weiteren Seite (1) aufweisen.

10. Warenbehälter nach einem der Ansprüche 6 bis 9, dadurch gekennzeichnet, daß die Regalböden (8) mit jeweiligen Haken (30) versehen sind, die dazu dienen, die jeweiligen Träger (32) zu umgreifen.

11. Warenbehälter nach Anspruch 8 oder 9, dadurch gekennzeichnet, daß die gebogenen Drähte (29) in den aufwärtsgerichteten eingeklappten Positionen und den abwärtsgerichteten eingeklappten Positionen der Regalböden (8) lösbar in jeweilige Ausnehmungen (33,34) in der benachbarten Seite (3) eingreifen.

## Revendications

1. Un container de marchandises comprenant une porte (4) de transfert de marchandises, la porte (4) comprenant des organes sensiblement horizontaux (14) séparant des ouvertures sensiblement horizontales à travers lesquelles des marchandises peuvent être introduites dans le container, les organes (14) et les ouvertures s'étendant de manière non interrompue sur la largeur interne de la porte (4), et la porte (4) pouvant être déplacée vers le haut et vers le bas entre un état non entravé dans lequel des marchandises peuvent être introduites à travers les ouvertures dans le container et un état entravé dans lequel les marchandises introduites sont empêchées par les organes (14) de quitter le container à travers les ouvertures, caractérisé en ce que ladite porte (4) de transfert de marchandises est la seule porte de transfert de marchandises du container et est montée de manière pivotante sur un côté adjacent (3) dudit container sans l'interposition d'un cadre intermédiaire, de manière à pouvoir être ouverte pour permettre d'accéder à l'intérieur du container.

2. Un container de marchandises selon la revendication 1, caractérisé en ce que, dans tout son déplacement entre ledit état non entravé et ledit état entravé, ladite porte (4) est verrouillée de manière libérable au moyen d'un crochet faisant sensiblement saillie horizontalement (13) venant en prise avec un élément sensiblement vertical (12) faisant saillie de manière sensiblement horizontale et pouvant être soulevé à une position complètement au-dessus du crochet (13) pour permettre à la porte (4) d'être ouverte en pivotant.

3. Un container de marchandises selon la revendication 1 ou 2, caractérisé en ce qu'une première partie (4'') de la porte (4) peut être déplacée vers le haut et vers le bas par rapport audit côté adjacent (3) et à la seconde partie (4') de la porte (4) et, dans lequel, dans ledit état entravé, lesdits organes sensiblement horizontaux (14) sont écartés verticalement l'un de l'autre d'un pas vertical sensiblement constant, chacune desdites première (4'') et seconde (4') parties comprenant au moins un desdits organes (14), et l'une des première et seconde parties (4'', 4') comprenant au moins un organe supplémentaire sensiblement horizontal (24) écarté de son organe (14) le plus proche d'une quantité inférieure audit pas vertical sensiblement constant.

4. Un container de marchandises selon la revendication 3, caractérisé en ce que ladite première partie (4'') est une section supérieure (4'') de ladite porte (4) et comprend ledit ou lesdits éléments additionnels sensiblement horizontaux (24) et en ce que ladite seconde partie (4') est une section inférieure (4') de ladite porte (4).

5. Un container de marchandises selon une quelconque revendication précédente et comprenant des étagères rétractables (8), caractérisé en ce que lesdites étagères (8) sont déplaçables parmi des positions respectives sensiblement horizontales dans lesquelles elles font saillie vers l'intérieur dudit côté (3) et sont écartées verticalement l'une de l'autre, des positions respectives rétractées vers le haut qui sont au-dessus desdites positions horizontales et dans lesquelles les étagères (8) se trouvent dans des plans sensiblement verticaux au niveau dudit côté (3), et des positions respectives rétractées vers le bas qui sont en dessous desdites positions horizontales et dans lesquelles les étagères (8) se trouvent dans des plans sensiblement verticaux au niveau dudit côté (3).

6. Un container de marchandises selon la revendication 5, caractérisé en ce que ledit container comprend un autre côté (1) sensiblement perpendiculaire audit côté adjacent (3) et assurant des supports respectifs (32) pour lesdites étagères (8) dans leurs positions sensiblement horizontales, et en ce que lesdites étagères (8) sont déplaçables de manière sensiblement horizontale en va-et-vient par rapport audit autre côté (1) pour permettre auxdites étagères (8) d'être amenées à pivoter au-delà desdits supports (32).

7. Un container de marchandises selon la revendication 6, caractérisé en ce que ledit container comprend des moyens de sollicitation poussant lesdites étagères (8) vers ledit autre côté (1), et des moyens formant came (29, 31, 32a) servant à éloigner à la façon d'une came lesdites étagères (8) dudit autre côté (1) pendant la rotation desdites étagères (8) dans lesdites positions rétractées vers le haut et lesdites positions rétractées vers le bas pour permettre auxdites étagères (8) d'être amenées dans leurs positions rétractées vers le haut et leurs positions rétractées vers le bas, en ce que lesdites étagères (8) dans leurs positions rétractées vers le haut et leurs positions rétractées vers le bas se trouvent sensiblement entièrement à l'extérieur de plans limites internes verticaux dudit côté adjacent (3), et en ce que lesdits moyens formant came (29, 31, 32a) servent à permettre aux-dites étagères (8) de passer devant des montants adjacents d'une cadre (31) dudit autre côté (1).

8. Un container de marchandises selon la revendication 7, caractérisé en ce que lesdits moyens formant came (29, 31, 32a) comprennent des tiges métalliques arquées respectives (29) constituant les bords respectifs desdites étagères les plus près dudit autre côté (1).

9. Un container de marchandises selon la revendication 8, caractérisé en ce que lesdits moyens formant came (29, 31, 32a) comprennent des paires de parties de tiges métalliques disposées obliquement (32a) dudit autre côté (1).

10. Un container de marchandises selon une quelconque des revendications 6 à 9, caractérisé en ce que lesdites étagères (8) présentent des crochets respectifs (30) servant à venir en prise avec lesdits supports respectifs (32).

11. Un container de marchandises selon la revendication 8 ou 9, caractérisé en ce que lesdites tiges métalliques arquées (29) s'engagent de manière libérable dans des évidements respectifs (33, 34) dudit côté adjacent (3) dans lesdites positions rétractées vers le haut et lesdites positions rétractées vers le bas desdites étagères (8).
